# EUROPEAN PATENT APPLICATION

(11) **EP 0 754 850 A1**
(43) Date of publication of application: **22.01.1997**
(21) Application number: 95305061.4
(22) Date of filing: 20.07.1995
(51) Int. Cl.: F02M 35/024, B01D 39/16, B01D 46/24

(54) **Filter for different motors and machines**

(71) Applicant: Goncalves, Mario, Sao Paulo SP (BR)
(72) Inventor: Goncalves, Mario, Sao Paulo SP (BR)
(74) Representative: Hackney, Nigel John

(57) **Abstract**

Disclosed is an air filter for different motors and machines made up by a part defined as a frame (1) and a filtering element (2), wherein said frame is preferably of the type injected in polyurethane P1, with its upper and lower faces provided with details shaped like sealing lips (3), as well as said frame is defined by two sections, being one upper section (4) and another lower section (4'), both of them in the form like discs or rings, interconnected away to each other so as between said discs or rings a notch (35) can be made up fork said filtering element (2); said frame (1) can have a shape other than circular, such as quadrate, rectangular or oval shape, which shape shall be followed by sections (4-4') the filtering element (2), the latter being made up by a unique foam part preferably of expanded polyurethane having a proper density.

## Description

This invention refers to an air filter for different motors and machines, or more particularly to a type of permanent filter which has been specially developed having in view the resources featuring in order that the filtering element can be of a permanent type, that is to say, after being washed, it can be washed and replaced into its place, thereby characterising an assembly fully different from those presently known and used for the same purpose, since as it is known to those qualified in this art, generally air filters mainly those used in internal combustion motors are fully disposable, thereby giving rise to a substantially high maintenance cost.

Therefore, the object hereof shall be to make said filter exactly not disposable and, therefor a filtering element has been created which shall be able to used again after being properly washed and its filtering capacity shall not be changed and, further in such a case, when necessary, of course after it has been used for a long time and after being washed several times, said filtering element can easily be replaced by another washable in the same way, having the advantage that said filter frame can be reused, thereby making a low cost filter and with the same efficiency of those presently known.

Preferably, another object hereof is to make up a permanent filter being able to be used in several types of machines, stationary explosion motors or not, different vehicles and/or others, including also compressors, vacuum devices and other machines that in any way suck in air which should be filtered.

Accordingly, the present invention provides an air filter including a filtering element removably attached to a frame wherein the frame includes an upper section and a lower section, said sections being joinable together to locate the filtering element therebetween, and being interconnected away to each other, so as between them a notch can be made up for said filtering element.

Other features of the present invention are set out in the appended claims.

To better understand this invention, a detailed description of the same is hereinafter given, and references to the attached drawings shall be made, wherein:
Figure 1 is a perspective exploded view showing in details the inner and outer elements of said filter;
Figure 2 is a side projection view showing in a half section said frame and gives details of fitting said filtering element into the filter frame; and
Figures 3 and 4 are views showing in detail some aspects of said filtering element.

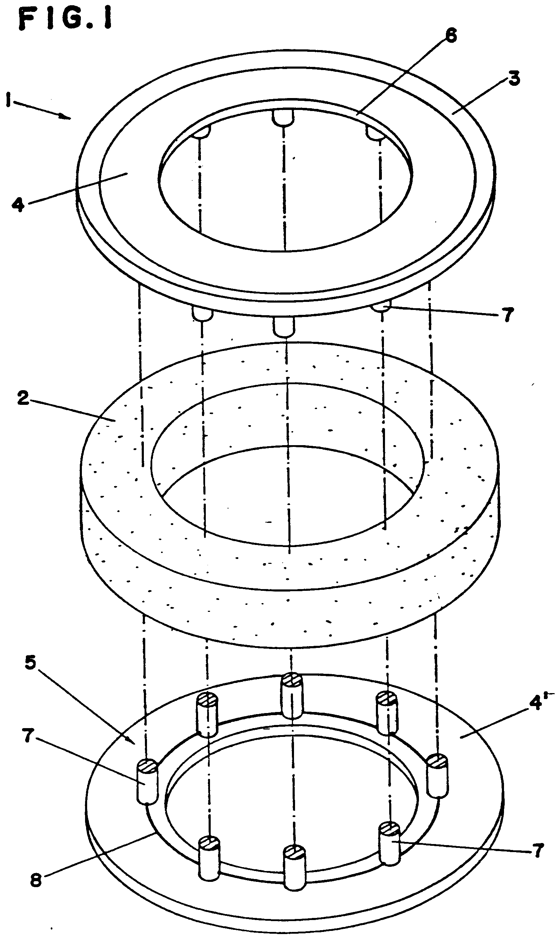

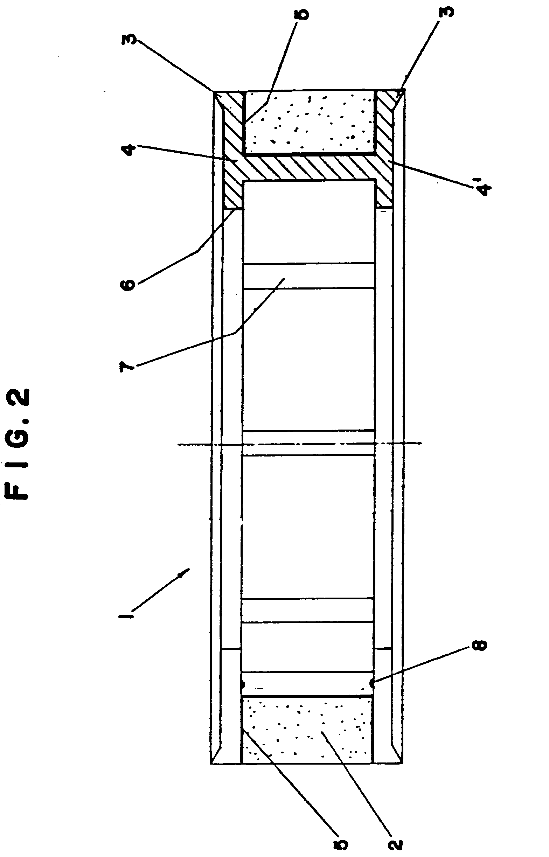

According to the illustrations above and their details, mainly Figures 1 and 2, this invention entitled "AIR FILTER FOR DIFFERENT MOTORS AND MACHINES" of the type made up by a part defined by a frame (1) and a filtering element (2) wherein said frame is of a type being preferably injected in polyurethane P1, the upper and lower faces thereof being provided with details in the form of sealing lips (3) as well as said frame is defined by two sections, that is, an upper section (4) and a lower section (4'), both of them in the form of discs or rings interconnected away from each other so as between said discs or rings a notch (5) can be made for said filtering element (2).

Said frame (1) can have a different form other than the circular one, such as quadrate, rectangular or oval shape, which form shall be followed by sections (4-4') and the filtering element (2).

The filtering element (2) is made up in an unique foam part preferably of an expanded polyurethane having a proper density.

The filtering element (2) density is preferably from 4 to 6 cells cm².

The upper (4) and lower (4') sections are interconnected to each other through their inner edges (6), where there are cylindric vertical bosses (7) equidistantly away from each other between said bosses the faces in front of said sections having boss or supporting cord (8) for said filtering element (2).

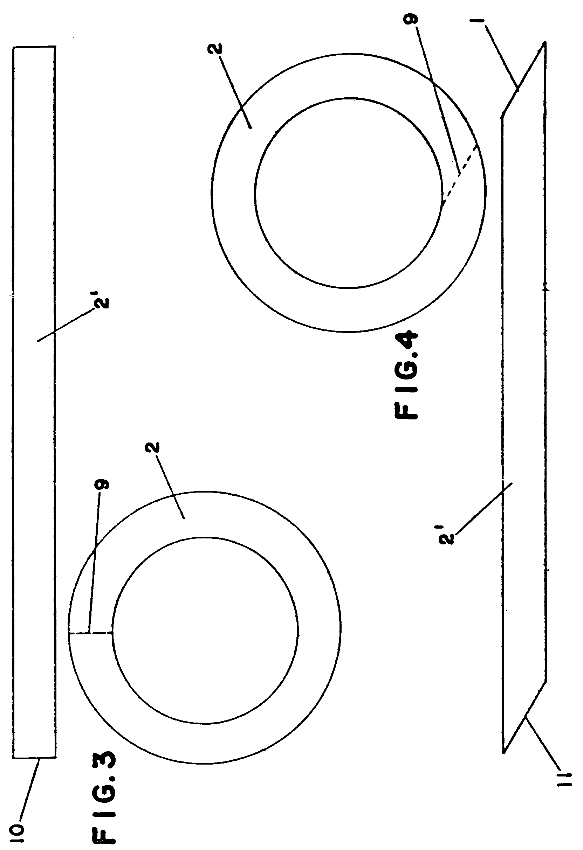

In reference to Figures 3 and 4, the filtering element (2) can be made up in an unique part having a circular form or any other form following the frame (1) form as well as the transverse section thereof is somewhat quadrangular.

Said filtering element (2) can also be in a band form (2') however, in such a case the ends thereof are glued (9) and therefor they can be in a right (10) or sloped (11) way.

As it can be seen as per what has been described and illustrated, in fact said filter has unpublished features wherein said frame (1) is a permanent component while said filtering element is of semi-disposable type that is to say after a given time period it can be washed and used again, but after a given number of washings only the filtering element (2) can be replaced by a new one, and so all resources to considerably reduce said machine maintenance can be added concerning the change from time to time of air filters.

## Claims

1. An air filter including a filtering element (2) removably attached to a frame (1) wherein the frame (1) includes an upper section (4) and a lower section (4'), said sections being joinable together to locate the filtering element therebetween, and being interconnected away to each other, so as between them a notch (5) can be made up for said filtering element (2).

2. An air filter according to any one of the above claims, wherein the density of said filtering element (2) is from 4 to 6 cells cm².

3. An air filter according to claim 1 or claim 2, wherein said upper (4) and lower (4') sections are interconnected to each other through their inner (6) edges wherein there are vertical cylindric bosses (7) equidistantly away from each other, between them the faces in front of said sections are provided with boss or supporting cord (8) for said filtering element (2).

4. An air filter according to any one of the above claims, wherein said filtering element (2) is a unique part having a circular or any other form following said frame form (1), as well as its transverse section is somewhat quadrangular.

5. An air filter according to any one of the above claims, wherein said filtering element (2) is shaped like a band (2'), but in such a case the ends thereof are glued (9) and, therefore, they can be in a right (10) or sloped (11) way.

6. An air filter according to any one of the above claims wherein said frame is made by injection moulding polyurethane P1.

7. An air filter according to any one of the above claims wherein the filtering material is a foam material.

8. An air filter according to any one of the above claims wherein the filtering material is expanded polyurethane.

9. An air filter according to any of the above claims wherein the filtering material of the filtering element (2) is cleanable by washing.
